(19) Europäisches Patentamt
European Patent Office
Office européen des brevets

(11) Publication number: 0 154 079
B1

(12) **EUROPEAN PATENT SPECIFICATION**

(45) Date of publication of patent specification: **19.08.87**

(51) Int. Cl.[4]: **C 08 G 18/42**, C 08 G 18/14

(21) Application number: **84307433.7**

(22) Date of filing: **29.10.84**

(54) **Process for the preparation of liquid terephthalic ester polyols and foams manufactured therefrom.**

(30) Priority: **18.11.83 US 553272**

(43) Date of publication of application:
**11.09.85 Bulletin 85/37**

(45) Publication of the grant of the patent:
**19.08.87 Bulletin 87/34**

(84) Designated contracting states:
**BE DE FR GB IT**

(56) References cited:
**EP-A- 0 093 247**
**EP-A- 0 104 736**
**DE-A- 3 131 203**
**GB-A- 2 030 997**
**US-A- 4 100 354**

(73) Proprietor: **TEXACO DEVELOPMENT CORPORATION**
**2000 Westchester Avenue**
**White Plains New York 10650 (US)**

(72) Inventor: **Grigsby, Robert Allison, Jr.**
**219 Deepwood**
**Georgetown, TX 78626 (US)**
Inventor: **Speranza, George Phillip**
**2800 Silverleaf**
**Austin, TX 78757 (US)**
Inventor: **Brennan, Michael Edward**
**6409 Shoal Creek Blvd.**
**Austin, TX 78757 (US)**

(74) Representative: **Burnside, Michael et al**
***Michael Burnside & Partners 2 Serjeants' Inn Fleet Street***
**London EC4Y 1HL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 154 079 B1

Jouve, 18, rue St-Denis, 75001 Paris, France

**Description**

The invention relates to polyols useful in the preparation of rigid polyurethane and polyisocyanurate foams, and more particularly relates to liquid aromatic polyester polyols made from reactions of recycled polyethylene terephthalate with oxyalkylene glycols.

It is known to prepare polyurethane foam by the reaction of polyisocyanate, a polyol and a blowing agent, such as a halogenated hydrocarbon, water or both, in the presence of a catalyst. One particular area of polyurethane technology is based upon rigid polyurethane foams.

The art discloses a wide variety of polyols useful as one of the main components in preparing polyurethanes, such as polyurethane foams. As an example, US-A-2 965 615 suggests the use of copolymers of alkenyl-substituted aromatic compounds, such as styrene, and ethylenically unsaturated monohydric alcohols, such as allyl alcohol, as useful resinous polyols for urethane production. Also disclosed as useful polyols are alkoxylated reaction products of the above copolymers.

Further, US-A-4 094 828 describes how a polyol combination comprising a polyether polyol and a copolymer of allyl alcohol and styrene provides for rigid polyurethane foams possessing unusual dimensional stability and heat distortion properties. Amino polyols may be modified with epoxy resin and alkylene oxides according to the invention disclosed in US-A-4 309 532. These modified polyols produce rigid polyurethane foams that have higher heat distortion temperatures and better low temperature properties than foams made with polyols not modified in such a fashion.

Rigid foams generally have good insulating properties and are thus desirable for use in building insulation. As with all building materials, it is desirable to provide rigid foams that are as fire resistant as possible. One approach to this goal is to modify the polyol.

Polyisocyanurate foams are a type which are considered to be fire resistant and to show low smoke evolution on burning, but they tend to be brittle or friable. Various types of polyols have been devised to lower the foam friability, but what frequently happens is that the fire and smoke properties of the polyisocyanurate foam deteriorate. Thus, a fine balance exists between the amount and type of polyol on adds to a polyisocyanurate foam formulation in order to maintain maximum flame and smoke resistance while at the same time improving foam friability. US-A-4 039 487 and 4 092 276 describe attempts at the fine balance, although each method has its disadvantages.

It is known that scrap polyalkylene terephthalate, such as polyethylene terephthalate (PET), can be incorporated into polyurethanes. For example, US-A-4 048 104 discloses that polyisocyanate prepolymers for use in polyurethane products may be prepared by combining an organic polyisocyanate with polyols which are the hydroxyl-terminated digestion products of waste polyalkylene terephthalate polymers and organic polyols. A polyol which is the digestion product of polyalkylene terephthalate residues or scraps digested with organic polyols is also described in US-A-4 223 068. Another instance where terephthalic acid residues are employed is outlined in US-A-4 246 365, where polyurethanes are made from polyesters containing at least two hydroxyl groups and terephthalic acid residues.

According to US-A-4 237 238, the transesterification of a residue from the manufacture of dimethyl terephthalate (DMT) with a glycol, provides a polyol mixture which is then used to produce polyisocyanurate foams having a combination of a high degree of fire resistance with low smoke evolution, low foam friability and high compressive strength. The preparation of a polyol mixture from ethylene glycol and dimethyl terephthalate-esterified oxidate residue is described in US-A-3 647 759.

J.M. Hughes and John Clinton, in the Proceedings of the S.P.I. 25th Annual Urethane Division Technical Conference Scottsdale, Arizona (October 1979), describe other foams prepared from the polyols of US-A-3 647 759. US-A-4 233 408 teaches that polyurethane foams may be made from polyester precursors derived from adipic acid process waste. The reaction product of propylene oxide and a partially hydrolyzed DMT process residue is taught as being a useful polyol reactant in the preparation of urethane foams, according to US-A-4 394 286.

Thus, by-products produced in the manufacture of adipic acid, PET or DMT have long been used as polyols in the production of rigid polyurethanes. However, bis-hydroxyethyl terephthalate and the corresponding product made form diethylene glycol are solids and separate from solution on standing. The resulting non-homogeneous solutions would be difficult to handle on a commercial scale. Such products are also terminated by primary hydroxyl groups, which make for a fast reaction with isocyanates. They also have poor compatibility with fluorocarbon-11, the blowing agent in rigid foams, and other polyols.

It would be desirable to provide an economical extender polyol which did not have the aforementioned disadvantages.

According to the present invention there is provided a process for the production of a liquid mixture of terephthalic ester polyols, the process comprising the step of

a. reacting recycled polyethylene terephthalate (PET) with diethylene glycol and at least one other oxyalkylene glycol, the mol ratio of total glycol to the basic repeating unit of said PET being greater than 1.2 : 1, the process being characterized by the step of

b. stripping from the reaction mixture as overhead at least 5 wt.%, based on the reactants charged, to provide a mixture of esters which is free from solids upon standing, and further characterized in that

c. at least 25 wt.% of said overhead is ethylene glycol.

The molecular weight of the basic repeating unit of PET is 192. It is by reference to this weight that mol ratios are calculated herein.

This invention also concerns the production of polyurethane or polyisocyanurate foams by reacting a polyisocyanate with the polyol obtainable by the above-mentioned process, in the presence of an appropriate catalyst.

In general, it has been discovered that rigid foams, such as rigid polyurethane and rigid polyisocyanurate foams, may be made using the liquid mixture of terephthalic esters of this invention either alone or as polyol extenders together with other polyols. The term « polyol extender » is used to mean any inexpensive polyol material that can be used to replace a portion of a more expensive polyol in a foam formulation. Thus, the supply of expensive polyol is extended and the overall cost of the foam is lowered.

Not only are the polyol mixtures of this invention useful polyol extenders in rigid foams, but they also remain in the liquid phase and do not precipitate solids upon standing. They thus retain their ease of processing. In the preparation of rigid urethane foams, the foam producer cannot tolerate solids in any feedstock, since they would plug the filters or give erratic flow rates. In addition, such a polyol mixture is compatible with trichlorofluoromethane (fluorocarbon-11) blowing agent.

By recycled PET is meant waste or scrap PET that has already been used in another form and discarded.

Generally, the scrap or recycled PET may be in any particulate form. A frequently seen form is fragmented soft drink bottles, which appear as clear or coloured chips. Polyethylene terephthalate film can also be recycled. Any chopping or pulverizing process which produces small bits of solid PET from the larger, waste recycled article would be appropriate to produce scrap PET useful according to the present invention. Sometimes the scrap PET is mixed with a solvent to make a slurry. While scrap PET slurry could be used in the method of this invention, the recycled PET chips without the solvent are also useful.

The recycled PET is first reacted with boiling oxyalkylene glycols. There is a tendency for the product of the process to include low molecular weight dihydroxy esters of terephthalic acid. Ordinarily, these diesters are quite crystalline and separate from solution as solids. Of course, it is preferable that the product includes aromatic polyester polyol-type compounds.

It is essential that diethylene glycol (DEG) be one of the oxyalkylene glycol reactants. It is also required that another oxyalkylene glycol be present as a co-reactant to help prevent the solids from settling out. Any single oxyalkylene glycol or mixture thereof can be used as the additional co-reactant with the DEG. Although the exact proportion of these oxyalkylene glycols is not important, it is preferred that the proportion of DEG should exceed that of the oxyalkylene glycol.

Preferably, the other oxyalkylene glycol has the formula

$$HO-(CH_2\underset{\displaystyle R}{\underset{|}{C}}HO)_n-H$$

where R is hydrogen or alkyl having one to four carbon atoms and n is from 2 to 10 (excluding diethylene glycol). The glycol may be a residue or a flash-separated glycol. Glycols which meet this definition are dipropylene glycol, triethylene glycol (TEG), tripropylene glycol and tetrapropylene glycol, among others. Note that this definition of oxyalkylene glycols does not include ethylene glycol or propylene glycol.

Another requirement for the process to make the mixture of liquid terephthalic esters according to this invention is that the mol ratio of total glycols to the basic PET repeating unit of the PET scrap, is greater than 1.2 : 1. It will be shown that, when this reactant mol ratio is equal to or less than 1.2 : 1, solids come out of the mixture after it is left standing.

The third important feature of the process for making the mixtures of this invention is the stripping of ethylene glycol (EG) during the reaction. The EG is derived from the PET during the reaction, and contributes to the deposition of the solids, which tend to precipitate out when the mixtures are left standing. At least 5 wt.% of the charge (the reactants) is taken out as overhead, and at least 25 wt.% of this overhead is EG. It is preferred that 15 to 25 wt.% of the charge, and most preferably 17 to 20 wt.%, is stripped out as overhead.

The temperature of the preparation process should preferably be from 190 to 280 °C, and more preferably, from 210 to 245 °C. The pressure should generally be from 0.1 to 4 MPa, more preferably from 0.1 to 2 MPa. No catalyst is necessary for this preparation. The product mixture of terephthalic ester polyols preferably has a hydroxyl number from 100 to 500, with an especially preferred range between 200 and 400.

The functionality of the product may be increased by including one or more additives into the reaction mixture to make the terephthalic ester polyol mixtures. Such additives include alpha-methyl glucoside (AMG), glycerol, triethanolamine, diethanolamine and sorbitol. Typically, the additive is present in an amount from 1 to 5 wt.%, based on the total reactant charge, although larger amounts could be used. It was found that use of as much as 2.5 wt.% of glycerol tended to cause the undesirable

precipitation of solids, so if glycerol is used as a functionality-enhancing additive, it should be used in proportions less than 2.5 wt.%. The most preferred additive in this regard is AMG.

These ester polyol mixtures can serve as polyol extenders when they are blended with conventional polyols for use in polyurethane foams. The polyols of this invention can also be used alone to prepare isocyanurate foams.

There is good compatibility of the ester polyols of this invention with trichlorofluoromethane. Trichlorofluoromethane, sold under the tradename (Registered Trademark) FREON R-11B, a conventional blowing agent, is the gas entrapped in closed-cell rigid foams which accounts for the excellent insulating properties of these foams.

The second constituent of the overall polyol combination found particularly useful in preparing rigid polyurethane foams is a polyether polyol having a hydroxyl number of 200 to 800. Usually the polyether polyol comprises 0 to 95 wt.% of the total polyol combination. Preferred polyether polyols of this type are the reaction products of a polyfunctional active hydrogen initiator and propylene oxide, ethylene oxide or mixed propylene oxide and ethylene oxide. The polyfunctional active hydrogen initiator most preferably has a functionality of 2 to 8.

A wide variety of initiators may be alkoxylated to form useful polyether polyols. Thus, for example, polyfunctional amines and alcohols of the following type may be alkoxylated : monoethanolamine, diethanolamine, triethanolamine, ethylene glycol, polyethylene glycol, propylene glycol, polypropylene glycol, glycerol, sorbitol, trimethylolpropane, sucrose and alphamethyl glucoside.

Such above amines or alcohols may be reacted with an alkylene oxide, such as ethylene oxide, propylene oxide or mixed ethylene oxide and propylene oxide, using techniques known to those skilled in the art. Thus, for example, the reaction of alkylene oxide with initiators of this type is set forth in US-A-2 948 757 and 3 000 963. Such alkoxylations are carried out in the presence of a basic catalyst at a temperature sufficient to sustain the reaction. The hydroxyl number which is desired for the finished polyol determines the amount of alkylene oxide used to react with the initiator. As noted above, the polyether polyols useful in accordance with the present invention have a hydroxyl number from 200 to 800. The reaction mixture is then neutralized and water and excess reactants are stripped from the polyol. The polyether polyol may be prepared by reacting the initiator with propylene oxide or ethylene oxide, or by reacting the initiator first with propylene oxide then with ethylene oxide, or vice versa, in one or more sequences to give a so-called block polymer chain, or by reacting the initiator with propylene oxide and ethylene oxide mixture to achieve a random distribution of such alkylene oxides.

Especially preferred as second polyol constituents are the nitrogen-containing polyether polyols described in US-A-3 297 597 and 4 137 265. These particularly preferred polyols are marketed by Texaco Chemical Company as THANOL R-350-X and THANOL R-650-X polyols. These polyols are prepared by reacting from 2 to 3 moles of propylene oxide with one mole of the Mannich reaction product of a mole of phenol or nonylphenol with one or two moles of diethanolamine and formaldehyde.

The final polyol combination more preferably comprises 0 to 95 wt.% of said polyether polyol and 100 to 5 wt.% of the terephthalic ester polyol mixtures according to this invention. Although the liquid terephthalic ester polyols according to this invention may be used alone, it is preferred that they be present in an amount of from 30 to 70 wt.% of the polyol blend. The polyol combination, in many instances, has a total hydroxyl number of from 100 to 500.

Any aromatic polyisocyanate may be used in the practice of the present invention. Typical aromatic polyisocyanates include m-phenylene diisocyanate, p-phenylene diisocyanate, polymethylene polyphenylisocyanate, 2,4-toluene diisocyanate, 2,6-tolylene diisocyanate, dianisidine diisocyanate, bitolylene diisocyanate, naphthalene-1,4-diisocyanate, and diphenylene-4,4'-diisocyanate, as well as aliphatic-aromatic diisocyanates, such as xylylene-1,4-diisocyanate, xylylene-1,2-diisocyanate, xylylene-1,3-diisocyanate, bis(4-isocyanatophenyl)methane, bis(3-methyl-4-isocyanatophenyl)methane, and 4,4'-diphenylpropane diisocyanate.

Greatly preferred aromatic polyisocyanates for use in the practice of the present invention are methylene-bridged polyphenyl polyisocyanate mixtures which have a functionality of from 2 to 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing the methylene-bridged polyphenyl polyamines and corresponding methylene-bridged polyphenyl polyisocyanates therefrom are described in the literature and in many patents ; for example, US-A-2 683 730 ; 2 950 263 ; 3 012 008 ; 3 344 162 ; and 3 362 979.

The most preferred methylene-bridged polyphenyl polyisocyanate mixtures used in accordance with the present invention contain from 20 to 100 wt.% of methylene diphenyl diisocyanate isomers, with any remainder being polymethylene polyphenyl diisocyanates having higher functionalities and higher molecular weights. Typical of these are polyphenyl polyisocyanate mixtures containing from 20 to 100 wt.% of methylene diphenyl diisocyanate isomers, of which 20 to 95 wt.% thereof is the 4,4'-isomer, with any remainder being polymethylene polyphenyl polyisocyanates of higher molecular weight and an average functionality of from 2.1 to 3.5. The isocyanate mixtures are known, commercially-available, materials and can be prepared by the process described in US-A-3 362 979.

In the production of rigid polyurethane foams in the practice of the invention, other known additives

are necessary. One such additive is a blowing agent. Some examples of such materials are trichloromonofluoromethane, dichlorodifluoromethane, dichloromonofluoromethane, 1,1-dichloro-1-fluoroethane, 1,1-difluoro-1,2,2-trichloroethane and chloropentafluoroethane. Other useful blowing agents include low-boiling hydrocarbons such as butane, pentane, hexane, and cyclohexane, see US-A-3 072 582, for example. The polyols of the present invention are quite compatible with fluorocarbon blowing agents, unlike some of the prior art polyols which are made from PET residues.

Surfactant agents, better known as silicone oils, are added to serve as cell stabilizers. Some representative materials are sold under the names of L-520, L-521 and DC-193 and are, generally, polysiloxane polyoxyalkylene block copolymers, such as those disclosed in US-A-2 834 748 ; 2 917 480 ; and 2 846 458.

Should fire retardancy be required for the polyurethane foam, two types of fire retardants are available ; those that are incorporated by mere mechanical mixing, and those that become chemically bound in the polymer chain. Representative of the first type are tris(chloroethyl)phosphate, tris(2,3-dibromopropyl)phosphate, diammonium phosphate, various halogenated compounds and antimony oxide. Representative of the chemically bound type are chlorendic acid derivatives, and various phosphorus-containing polyols.

The catalysts which may be used to make the foams according to this invention are well known. There are two general types of catalyst ; tertiary amines and organo-metallic compounds. Examples of suitable tertiary amines, used either individually or in admixture, are the N-alkylmorpholines, N-alkylalkanolamines, N,N-dialkylcyclohexylamines and alkylamines where the alkyl groups are methyl, ethyl, propyl, butyl, etc. Examples of specific tertiary amine catalysts useful in accordance with this invention are triethylenediamine, tetramethylethylenediamine, triethylamine, tripropylamine, tributylamine, triamylamine, pyridine, quinoline, dimethylpiperazine, dimethylhexahydroaniline, piperazine, N-ethylmorpholine, 2-methylpiperazine, dimethylaniline, nicotine, dimethylaminoethanol, tetramethylpropanediamine and methyltriethylenediamine. Useful organometallic catalysts include compounds of bismuth, lead, tin, titanium, iron, antimony, uranium, cadmium, cobalt, thorium, aluminium, mercury, zinc, nickel, cerium, molybdenum, vanadium, copper, manganese and zirconium. Some examples of these metal catalysts include bismuth nitrate, lead 2-ethylhexoate, lead benzoate, lead oleate, dibutyltin dilaurate, tributyltin, butyltin trichloride, stannic chloride, stannous octoate, stannous oleate, dibutyltin di(2-ethylhexoate), ferric chloride, antimony trichloride, antimony glycolate and tin glycolates. Selection of the individual catalysts and proportions to be used in the polyurethane-forming reaction are well within the knowledge of those skilled in the art, and an amine and organometallic compound are often used together in the polyurethane-forming reaction.

The rigid polyurethane foams prepared in accordance with the present invention can be made in one step by reacting all the ingredients together at once (one-shot process), or the rigid foams can be made by the so-called « quasi-prepolymer method ». In accordance with this latter method, a portion of the polyol component is reacted, in the absence of a catalyst, with the polyisocyanate component so as to provide from 20 to 40 % based on the polyol of free isocyanato groups in the reaction product. To prepare foam, the remainder of the polyol is added, and the two components are allowed to react in the presence of a catalyst and other appropriate additives, such as blowing agents, foam stabilizing agents, fire retardants, etc. The blowing agent, the foam stabilizing agent, the fire retardant, etc., may be added either to the prepolymer or to the remaining polyol, or to both, before mixing takes place whereby, at the end of the reaction, a rigid polyurethane foam is provided.

In a preferred embodiment, the amount of polyol combination is used such that the isocyanato groups are present in the foam in at least a stoichiometrically-equivalent amount, and preferably in slight excess, compared with the free hydroxyl groups. Preferably, the amounts of ingredients will be such as to provide from 1.05 to 8.0 mol equivalents of isocyanato groups per mol equivalent of hydroxyl groups.

The invention will be illustrated further with respect to the following specific Examples, which are given by way of illustration and not given as limitations on the scope of this invention. All percentages are by weight unless otherwise indicated. The synthesis of the polyols of this invention will be presented, along with examples of how these polyol mixtures are used as polyol extenders to prepare foams.

Many modifications may be made in the polyol mixtures of this invention and their method of production. For example, one skilled in the art could adjust the temperature, pressure, reactants, proportions and modes of addition, to provide polyol mixtures that give foams with optimal properties.

### Example 1 (comparative)

To a 20 litre stirred autoclave were added 3 200 g of polyethylene terephthalate chips and 4 800 g of diethylene glycol. The contents were flushed with nitrogen and then heated to 220 °C, and held at this temperature for three hours without removing any overhead. The product had a hazy appearance, and a hydroxyl number of 632. After one day solids began to separate.

### Example 2 (comparative)

To a 500 ml reaction flask were added 80 g of polyethylene terephthalate chips and 120 g of

diethylene glycol. The contents were flushed with nitrogen and then heated to 215 °C and held at this temperature for one hour without removing any overhead. The product upon cooling was a fluid liquid with a hydroxyl number of 622. After several days, solids began to separate.

Example 3 (comparative)

To a 20 litre stirred autoclave were added 3 200 g of polyethylene terephthalate chips and 4 800 g of diethylene glycol. The contents were flushed with nitrogen and then heated to 220 °C. After three hours at 230 °C, a total of 800 ml of overhead was collected. The overhead contained 5.7 % of water, 75.9 % of ethylene glycol and 18.4 % of diethylene glycol. The remainder was a liquid which had a hydroxyl number of 493, and a viscosity of 500 centistokes at 24 °C. This product deposited white solids after standing for several days.

Example 4 (comparative)

To a 500 ml reaction flask were added 80 g of polyethylene terephthalate chips, 90 g of diethylene glycol and 30 g of dipropylene glycol. The contents were flushed with nitrogen and then heated to 215 °C, and held at this temperature for one hour without removing any overhead. The product upon cooling was a fluid liquid with a hydroxyl number of 595. After several days, solids began to separate.

Example 5

To a 500 ml reaction flask were added 80 g of polyethylene terephthalate chips, 90 g of diethylene glycol and 30 g of dipropylene glycol. The contents were flushed with nitrogen and then heated to 220 °C. After six hours at 220 to 228 °C, a total of 20 ml of overhead was collected. The overhead contained 3.8 % of water, 59.1 % of ethylene glycol, and 35.9 % of diethylene glycol and/or dipropylene glycol. Upon cooling, the remainder was a liquid which had a hydroxyl number of 491. This product did not deposit any solids upon standing.

Example 6

To a 20 litre stirred autoclave were added 6 000 g of polyethylene terephthalate chips, 5 400 g of diethylene glycol and 3 600 g of dipropylene glycol. The contents were flushed with nitrogen and then heated to 220 °C. After three hours at 220 to 250 °C, a total of 1 500 ml of overhead was collected. The overhead contained 2.4 % of water, 54.5 % of ethylene glycol, 10.5 % of diethylene glycol and 29.2 % of dipropylene glycol. The autoclave was cooled to room temperature and an additional 3 000 g of polyethylene terephthalic chips were added. The contents were fluxhed with nitrogen and heated to 220 °C. After about three hours at 230 °C at total of 1 650 ml of overhead was collected. The overhead contained 1.7 % of water, 30.9 % of dipropylene glycol, 49.7 % of ethylene glycol and 15.4 % of diethylene glycol. The remainder was a liquid which had a hydroxyl number of 268 and viscosity of 17 362 centistokes at 24 °C. This product did not deposit any solids after standing for one month.

Example 7

To a 20 litre stirred autoclave were added 6 000 g of polyethylene terephthalate chips, 5 400 g of diethylene glycol and 3 600 g of dipropylene glycol. The contents were flushed with nitrogen and then heated to 220 °C. After three hours at 220 to 250 °C a total of 1 500 ml of overhead was collected. The overhead contained 5.6 % of water, 62.9 % of ethylene glycol, 4.5 % of diethylene glycol and 22.3 % of dipropylene glycol. The autoclave was cooled to room temperature and an additional 3 000 g of polyethylene terephthalate chips were added. The contents were flushed with nitrogen and heated to 220 °C. After three hours at 230 °C, a total of 1 650 ml of overhead was collected. The overhead contained 8.3 % of water, 54.5 % of ethylene glycol, 2.8 % of diethylene glycol and 14.8 % of dipropylene glycol. The remainder was a liquid which had a hydroxyl number of 253 and viscosity of 16 538 centistokes at 24 °C. This product did not deposit any solids after standing for one month.

Example 8

To a 1 000 ml reaction flask were added 300 g of polyethylene terephthalate, 180 g of diethylene glycol and 120 g of a dipropylene glycol blend, M-103, obtained from Arco Chemical Company. The dipropylene glycol blend contained 82.0 % of dipropylene glycol, 16.8 % of tripropylene glycol and 1.0 % of tetrapropylene glycol. The contents of the flask were flushed with nitrogen and heated to 220 °C. After 2.5 hours at 220 to 240 °C, 100 ml of overhead was collected. The remainder was a liquid upon cooling which had a hydroxyl number of 245. This product did not deposit any solids upon standing.

Example 9

To a 20 litre autoclave were added 7 582.8 g of polyethylene terephthalate, 4 549.7 g of diethylene glycol and 3 033.1 g of the Arco Chemical Co. dipropylene glycol blend, M-103. The contents of the flask were flushed with nitrogen and heated to 220 °C. After 4 hours at 220 to 250 °C, 2 400 ml of overhead was collected. The remainder was a liquid upon cooling which had a hydroxyl number of 244. This product did not deposit any solids upon standing.

Example 10

To a 1 000 ml reaction flask were added 192 g of polyethylene terephthalate, 115.2 g of diethylene glycol, 72.9 g of dipropylene glycol and 3.8 g of alphamethyl glucoside. The contents of the flask were flushed with nitrogen and heated to 235 °C. After two hours at 235 °C, 60 ml of overhead was collected. The remainder was a liquid upon cooling which had a hydroxyl number of 316. This product did not deposit any solids upon standing.

Example 11

To a 1 000 ml reaction flask were added 300 g of polyethylene terephthalate, 180 g of diethylene glycol, 120 g of the Arco Chemical Co. dipropylene glycol blend, M-103, and 6.0 g of alphamethyl glucoside. The contents of the flask were flushed with nitrogen and heated to 240 °C. After 2 hours at 240 °C, 100 ml of overhead was collected. The remainder was a liquid upon cooling which had a hydroxyl number of 278. This product did not deposit any solids upon standing.

Example 12

To a 1 000 ml reaction flask were added 192 g of polyethylene terephthalate, 115.2 g of diethylene glycol, 72.9 g of dipropylene glycol and 3.8 g of glycerol. The contents of the flask were flushed with nitrogen and heated to 240 °C. After two hours at 240 °C, 60 ml of overhead was collected. The remainder was a liquid upon cooling which had a hydroxyl number of 324. This product did not deposit any solids upon standing.

Example 13 (comparative)

To a 1 000 ml reaction flask were added 192 g of polyethylene terephthalate, 101.8 g of diethylene glycol, 32.2 g of dipropylene glycol and 8.2 g of alphamethyl glucoside. The contents of the flask were flushed with nitrogen and heated to 235 °C. After 3 hours at 235 °C, 30 ml of overhead was collected. The remainder was a liquid upon cooling which had a hydroxyl number of 296. This product did deposit solids upon standing.

Example 14 (comparative)

To a 1 000 ml reaction flask were added 192 g of polyethylene terephthalate, 101.8 g of diethylene glycol, 32.2 g of dipropylene glycol and 8.2 g of glycerol. The contents of the flask were flushed with nitrogen and heated to 225 °C. After one hour at 225 °C, 30 ml of overhead was collected. The remainder was a liquid upon cooling which had a hydroxyl number of 327. This product did deposit solids upon standing.

Example 15 (comparative)

To a 1 000 ml reaction flask were added 192 g of polyethylene terephthalate, 115 g of diethylene glycol, 72.9 g of dipropylene glycol and 9.7 g of glycerol. The contents of the flask were flushed with nitrogen and heated to 225 °C. After one hour at 225 °C, 35 ml of overhead was collected. The remainder was a liquid upon cooling which had a hydroxyl number of 431. This product did deposit solids upon standing.

Example 16

To a 1 000 ml reaction flask were added 192 g of polyethylene terephthalate, 115.2 g of diethylene glycol, 72.9 g of dipropylene glycol and 9.7 g of alphamethyl glucoside. The contents of the flask were flushed with nitrogen and heated to 235 °C. After 2 hours at 236 °C, 35 ml of overhead was collected. The remainder was a liquid upon cooling which had a hydroxyl number of 387. This product did not deposit solids upon standing.

Example 17

To a 1 000 ml reaction flask were added 192 g of polyethylene terephthalate, 115.2 g of diethylene glycol, 72.9 g of dipropylene glycol and 3.8 g of triethanolamine. The contents of the flask were flushed with nitrogen and heated to 230 °C. After 2 hours at 230 °C, 60 ml of overhead was collected. The remainder was a liquid upon cooling which had a hydroxyl number of 321. This product did not deposit solids upon standing.

Example 18

To a 1 000 ml reaction flask were added 192 g of polyethylene terephthalate, 115.2 g of diethylene glycol, 72.9 g of dipropylene glycol and 3.8 g of diethanolamine. The contents of the flask were flushed with nitrogen and heated to 220 °C. After 3 hours at 230 °C, 60 ml of overhead was collected. The remainder was a liquid upon cooling which had a hydroxyl number of 294. This product did not deposit any solids upon standing.

Example 19

To a 1 000 ml reaction flask were added 240 g of polyethylene terephthalate, 172.8 g of diethylene glycol, 43.2 g of dipropylene glycol and 24 g of alphamethyl glucoside. The contents of the flask were flushed with nitrogen and heated to 220 °C. After 4 hours at 234 °C, 40 ml of overhead was collected. The remainder was a liquid upon cooling which had a hydroxyl number of 405. This product did not deposit solids upon standing.

Example 20

To a two litre 3-necked flask were added 500 g of PET resin (2.6 moles), 400 g of diethylene glycol (3.8 moles), 100 g of PEG-200 (polyethylene glycol with an average molecular weight of 200) and 2 ml of tetraisopropyl titanate. A stirrer, nitrogen inlet, condenser and K-head were attached. The materials were heated to 226 °C, at which time condensation was collected overhead. After 2.5 hours at 226 to 240 °C, a total of 175 ml of overhead was collected. The bottoms comprised a fluid liquid which had a hydroxyl number of 239. In this example, like all of the inventive examples herein, at least 25 wt.% of the overhead was ethylene glycol.

Example 1 describes an experiment in which only PET and diethylene glycol are used. No overhead was taken off. Example 2 is similar to Example 1, except on a smaller scale. Example 3 is similar to Example 1, except that some of the ethylene glycol was removed by distillation. No other oxyalkylene glycol was used, however, so solids appear. Example 4 is similar to Example 1, except that dipropylene glycol was included in the reactants. No overhead was taken out of the product by distillation. The product did deposit solids upon standing. Example 5 is similar to Example 4, except that some of the ethylene glycol was removed from the product by distillation. The resulting product did not deposit any solids upon standing. Example 6 is very similar to Example 5, the only difference being in the size of the reactor. Example 6 was completed in a 20 litre reactor. Example 7 is a repeat of Example 5, showing that the liquid product can be made reproducibly. Example 8 shows that a dipropylene glycol bottoms stream, M-103, could be substituted for the dipropylene glycol used to make the liquid product. Example 9 is very similar to Example 8, except that the size of the reactor used and the amount of product made were increased.

To increase the functionality of the product, several additives were added to the reactants. Example 10 illustrates the use of alphamethyl glucoside. The result is a fluid liquid product. Example 11 illustrates that alphamethyl glucoside can be used with the dipropylene glycol bottoms stream, M-103. Examples 12, 16, 17 and 18 also illustrate that glycerol, triethanolamine and diethanolamine can also be used to increase the functionality of the product.

Products containing various amounts of an additive (Table 1) to increase the functionality of the product can have solids present in them if the mol ratio of the glycols to the basic PET repeating unit is equal to or less than 1.2 (glycols/PET). For example, in Examples 13 and 14, there is 2.5 % of either glycerol or alphamethyl glucoside present in the reactants. The molar total of diethylene glycol and dipropylene glycol is 1.20 mol. The number of mols of the PET repeating unit is 1.0. The mol ratio of the glycols to the PET repeating unit would therefore be 1.20 (1.20/1.0). The products of Examples 13 and 14 deposited solids upon standing.

Example 19 has 5 % of alpha-methyl glucoside in the reactants and a mol ratio of glycols to the PET repeating unit of 1.56 (1.95/1.25). The product of Example 19 did not deposit any solids upon standing, even with a higher percentage of alphamethyl glucoside. The products of Examples 10, 12, 16, 17 and 18 also did not deposit any solids. These examples were run at a mol ratio of glycols to the PET repeating unit of 1.63. The product of Example 15 did deposit solids after standing for a few days. Example 15 contained 2.5 % of glycerol in the reactants while Example 12 contained 1 % of glycerol in the reactants, and the product did not deposit any solids. Glycerol apparently has a greater tendency to deposit solids at 2.5 % concentration than alphamethyl glucoside at 2.5 %.

Table 1

Summary of some of the examples

| | Example No. | | | | | | | | |
|---|---|---|---|---|---|---|---|---|---|
| | 13 | 14 | 19 | 12 | 10 | 16 | 17 | 18 | 15 |
| PET, mols[1] | 1.00 | 1.00 | 1.25 | 1.00 | 1.00 | 1.00 | 1.00 | 1.00 | 1.00 |
| DEG, mols | 0.96 | 0.96 | 1.63 | 1.09 | 1.09 | 1.09 | 1.09 | 1.09 | 1.09 |
| DPG, mols | 0.24 | 0.24 | 0.32 | 0.54 | 0.54 | 0.54 | 0.54 | 0.54 | 0.54 |
| Mol Ratio (DEG+DPG)/PET[1] | 1.20 | 1.20 | 1.56 | 1.63 | 1.63 | 1.63 | 1.63 | 1.63 | 1.63 |
| Glycerine, % | - | 2.5 | -- | 1.0 | - | - | - | - | 2.5 |
| AMG, %[2] | 2.5 | - | 5.0 | - | 1.0 | 2.5 | - | - | - |
| DEA, %[3] | - | - | - | - | - | - | 1.0 | - | - |
| TEA, %[4] | - | - | -- | - | - | - | - | 1.0 | - |
| Solids | Yes | Yes | No | No. | No | No | No | No | Yes |

[1] The molecular weight of polyethylene terephthalic is assumed to be 192.
[2] AMG is alpha-methyl glucoside.
[3] DEA is diethanolamine.
[4] TEA is triethanolamine.

Preparation of Fire Retarded Rigid Polyurethane and Polyisocyanurate Foams

The experimental aromatic polyester polyols were used as extender polyols at the 30 % level in THANOL (Registered Trade Mark) R-350-X and THANOL R-650-X polyurethane formulations or as the sole polyol in polyisocyanurate formulations.

Formulation components were miwed at 2 700 rpm and poured into 200 × 200 × 150 mm (600 g pour) or 125 × 200 × 150 mm (200 g pour) open moulds and allowed to rise. The resulting foams were allowed to stand at room temperature for at least three days before testing. Formulations, reaction profiles, visual observations and physical properties are listed in Table 2.

(See Table 2 pages 11 and 12)

Table 2

| | Rigid Polyurethane Foams | | | | | | | | Isocyanurate Foams* | | | |
|---|---|---|---|---|---|---|---|---|---|---|---|---|
| Formulation, pbw | A | B | C | D | E | F | G | H | I | J | K | L |
| THANOL*R-350-X (OH = 534) | 25.1 | - | 24.9 | - | 25.3 | - | 25.3 | - | - | - | - | - |
| THANOL*R-650-X (OH = 451) | - | 27.2 | - | 26.9 | - | 27.2 | - | 27.2 | - | - | - | - |
| Mixture, Ex. 6 (OH = 268) | 10.7 | 11.7 | - | - | - | - | - | - | 20.5 | - | - | - |
| " Ex. 11 (OH = 278) | - | - | 10.7 | 11.5 | - | - | - | - | - | 34.8 | - | - |
| " Ex. 8 (OH = 245) | - | - | - | - | 10.8 | 11.7 | - | - | - | - | 37.3 | - |
| " Ex. 9 (OH = 244) | - | - | - | - | - | - | 10.8 | 11.7 | - | - | - | 37.3 |
| ANTIBLAZE*80[1] | 5.0 | 5.0 | 5.0 | 5.0 | 5.0 | 5.0 | 5.0 | 5.0 | - | 5.0 | 5.0 | 5.0 |
| Water, wt.% | 0.2 | 0.2 | 0.2 | 0.2 | 0.2 | 0.2 | 0.2 | 0.2 | | | | |
| FREON*R-11[2] | 12.0 | 12.0 | 12.0 | 12.0 | 12.0 | 12.0 | 12.0 | 12.0 | 12.0 | 12.0 | 12.0 | 12.0 |
| L-5420[3] | 0.5 | 0.5 | 0.5 | 0.5 | 0.5 | 0.5 | 0.5 | 0.5 | - | - | - | - |
| FOMREZ*UL-32[4] | 0.01 | 0.01 | 0.01 | 0.01 | 0.01 | 0.01 | 0.01 | 0.01 | - | - | - | - |
| Silicone DC-193[5] | - | - | - | - | - | - | - | - | 0.5 | 0.5 | 0.5 | 0.5 |
| T-45[6] | - | - | - | - | - | - | - | - | 1.5 | 1.5 | 1.5 | 1.5 |
| MONDUR*MR[7] | 46.5 | 43.4 | 46.7 | 43.9 | 46.2 | 43.4 | 46.2 | 43.4 | 65.5 | 46.2 | 43.7 | 43.7 |
| Index | 1.2 | 1.2 | 1.2 | 1.2 | 1.2 | 1.2 | 1.2 | 1.2 | 5.0 | 2.0 | 2.0 | 2.0 |
| Times, secs, mixing | 10 | 8 | 10 | 8 | 10 | 8 | 10 | 8 | 3 | 3 | 3 | 3 |
| cream | 14 | 13 | 17 | 15 | 17 | 15 | 17 | 15 | 6 | 6 | 6 | 6 |
| gel | 57 | 53 | 63 | 52 | 62 | 55 | 63 | 58 | 21 | 17 | 18 | 19 |
| tack free time | 83 | 69 | 85 | 65 | 88 | 69 | 85 | 66 | 65 | 19 | 19 | 21 |
| rise | 123 | 120 | 136 | 128 | 133 | 126 | 138 | 124 | 58 | 42 | 36 | 50 |
| Initial surface friability | none | none | none | none | none | none | none | none | yes | yes | yes | yes |
| Foam appearance | good | good | good | good | good | good | good | good | good | fair | good | fair |
| Density, $Kg/m^3$ | 30.60 | 32.20 | 30.28 | 32.20 | 29.80 | 32.36 | 30.28 | 32.26 | 33.32 | - | 28.20 | - |
| K-factor | 0.121 | 0.125 | 0.121 | 0.120 | 0.123 | 0.123 | 0.117 | 0.117 | 0.138 | - | - | - |
| Comp. str. (MPa) with rise | 0.284 | 0.300 | 0.302 | 0.288 | 0.284 | 0.302 | 0.311 | 0.277 | 0.282 | - | 0.182 | - |
| against rise | 0.086 | 0.098 | 0.088 | 0.101 | 0.084 | 0.092 | 0.093 | 0.100 | 0.122 | - | 0.052 | - |
| Heat distortion, °C | 144 | 128 | 115 | 111 | 122 | 132 | 120 | 108 | >220 | - | 110 | - |
| Closed cells, % | 93.62 | 92.35 | 91.25 | 91.53 | 91.82 | 91.65 | 91.81 | 92.15 | 90.92 | - | 92.54 | - |
| Friability, % wt loss, 10 minutes | 1.79 | 2.72 | 2.69 | 2.02 | 0.36 | 2.01 | 3.03 | 2.48 | 49.47 | - | 1.41 | - |
| ASTM 1692 burn, mm/min (BHA) | 40.39 | 36.58 | 39.88 | 36.83 | 39.12 | 37.60 | 48.01 | 39.88 | 40.89 | | | |

* Registered Trade Mark.

Table 2 (Continued)

| | Rigid Polyurethane Foams | | | | | | | | Isocyanurate Foams* | | | |
|---|---|---|---|---|---|---|---|---|---|---|---|---|
| Butler Chimney Test | A | B | C | D | E | F | G | H | I | J | K | L |
| Flame height, mm | >280 | >280 | >280 | >280 | >280 | >280 | >280 | >280 | 157 | - | - | - |
| Secs. to extinguish | 12 | 11 | 17 | 17 | 12 | 12 | 10 | 13 | 10 | - | - | - |
| Wt % retained | 69.5 | 80.4 | 69.0 | 70.8 | 71.8 | 74.8 | 77.3 | 74.1 | 93.9 | - | - | - |

* Isocyanurate foams J and L were not tested for properties.

[1] Tris-(2-chloropropyl)phosphate, a fire retardant sold by Mobil Chemical.
[2] Trichlorofluoromethane.
[3] A silicone surfactant sold by Union Carbide Corp.
[4] A tin catalyst sold by Witco Chemical Corp.
[5] A silicone surfactant made by Dow Corning Corp.
[6] Potassium octoate in glycol made by M&T Chemical Co.
[7] A polymeric isocyanate sold by Mobay Chemical Co.

**Claims**

1. A process for the production of a liquid mixture of terephthalic ester polyols, the process comprising the step of

a. reacting recycled polyethylene terephthalate (PET) with diethylene glycol and at least one other oxyalkylene glycol, the mol ratio of total glycol to the basic repeating unit of said PET being greater than 1.2 : 1, the process being characterized by the step of

b. stripping from the reaction mixture as overhead at least 5 wt.%, based on the reactants charged, to provide a mixture of esters which is free from solids upon standing,

and further characterized in that

c. at least 25 wt.% of said overhead is ethylene glycol.

2. A process according to Claim 1 characterized in that the other oxyalkylene glycol has the formula

$$HO-(CH_2\underset{\underset{R}{|}}{C}HO)_n-H$$

where R is hydrogen or alkyl having 1 to 4 carbon atoms, and n is from 2 to 10, but excluding diethylene glycol.

3. A process according to Claim 1 or 2, characterized in that a functionality-enhancing additive selected from alpha-methyl glucoside, triethanolamine, diethanolamine and glycerol is present during the reaction.

4. A process according to Claim 3 characterized in that the functionality-enhancing additive is alpha-methyl glucoside.

5. A process according to Claim 3 characterized in that the functionality-enhancing additive is glycerol in an amount of less than 2.5 wt. %, based on the total weight of reactants charged.

6. A process according to any preceding Claim characterized in that the process is conducted at a temperature of from 190 to 280 °C and at a pressure of from 0.1 to 2 MPa.

7. A process according to any preceding Claim characterized in that the reaction is carried out until the average hydroxyl number of the resultant mixture is between 100 and 500.

8. A rigid polyurethane foam obtained by reacting an organic polyisocyanate and a polyol in the presence of a blowing agent and a catalyst of polyurethane formation characterized in that the polyol comprises a mixture of liquid terephthalic ester polyols obtainable by a process according to any of Claims 1 to 7.

9. A rigid polyisocyanurate foam obtained by reacting an organic polyisocyanate and a polyol component in the presence of a blowing agent and a polyisocyanurate trimerization catalyst characterized in that the polyol comprises a mixture of liquid terephthalate ester polyols obtainable by a process according to any of Claims 1 to 7.

**Patentansprüche**

1. Verfahren zur Herstellung eines flüssigen Gemisches von Terephthalester-polyolen, wobei das Verfahren den Verfahrensschritt umfaßt

a. Umsetzung von Recycling-Polyethylenterephthalat (PET) mit Diethylenglykol und mindestens einem anderen Oxyalkylenglykol, wobei das Molverhältnis von Gesamtglykol zur sich wiederholenden Grundeinheit des PET größer als 1,2 : 1 beträgt, und das Verfahren durch den Verfahrensschritt gekennzeichnet ist

b. Abstreifen von mindestens 5 Gew.%, bezogen auf die eingesetzten Reaktionskomponenten, des Reaktionsgemisches als Kopfprodukt zur Bereitstellung eines Estergemisches, welches sich beim Stehen frei von Feststoffen erweist, und weiterhin dadurch charakterisiert, daß

c. mindestens 25 Gew.% des Kopfproduktes Ethylenglykol ist.

2. Verfahren nach Anspruch 1, dadurch gekennzeichnet, daß das andere Oxyalkylenglykol die Formel hat,

$$HO-(CH_2\underset{\underset{R}{|}}{C}HO)_n-H$$

worin R Wasserstoff oder Alkyl mit 1 bis 4 Kohlenstoffatomen und n 2 bis 10 bedeuten, jedoch ausgenommen Diethylenglykol.

3. Verfahren nach Anspruch 1 oder 2, dadurch gekennzeichnet, daß die Umsetzung in Gegenwart eines Additivs erfolgt, das die Funktionalität erhöht, nämlich alpha-Methylglucosid, Triethanolamin, Diethanolamin oder Glycerin.

4. Verfahren nach Anspruch 3, dadurch gekennzeichnet, daß das die Funktionalität erhöhende Additiv alpha-Methylglycosid ist.

5. Verfahren nach Anspruch 3, dadurch gekennzeichnet, daß das die Funktionalität erhöhende Additiv Glycerin ist in einer Menge von weniger als 2,5 Gew.%, bezogen auf das Gesamtgewicht der eingesetzten Reaktionskomponenten.

6. Verfahren nach einem der vorhergehenden Ansprüche, dadurch gekennzeichnet, daß das Verfahren bei einer Temperatur von 190 bis 280 °C und einem Druck von 0,1 bis 2 MPa durchgeführt wird.

7. Verfahren nach einem der vorhergehenden Ansprüche, dadurch gekennzeichnet, daß die Umsetzung bis zu einer durchschnittlichen Hydroxylzahl des sich ergebenden Gemisches von 100 bis 500 durchgeführt wird.

8. Polyurethan-Hartschaum erhalten durch die Umsetzung eines organischen Polyisocyanats und eines Polyols in Gegenwart eines Blähmittels und eines Katalysators zur Polyurethan-Bildung, dadurch gekennzeichnet, daß das Polyol ein Gemisch von flüssigen Terephthalesterpolyolen enthält oder daraus besteht, das durch durch ein Verfahren nach einem der Ansprüche 1 bis 7 erhältlich ist.

9. Polyisocyanurat-Hartschaum erhalten durch die Umsetzung eines organischen Polyisocyanats und einer Polyolkomponente in Gegenwart eines Blähmittels und eines Katalysators zur Trimerisation von Polyisocyanurat, dadurch gekennzeichnet, daß das Polyol ein Gemisch von flüssigen Terephthalatpolyolen enthält oder daraus besteht, das durch ein Verfahren nach einem der Ansprüche 1 bis 7 erhältlich ist.

**Revendications**

1. Procédé de préparation d'un mélange liquide de polyols à base d'ester téréphtalique, comprenant l'étape suivante :

a. de réaction de polyéthylène téréphtalate (PET) recyclé avec du diéthylène glycol et au moins un autre oxyalkylène glycol, le rapport molaire du glycol total par rapport à l'unité de base de répétition dudit PET étant supérieur à 1,2 : 1, ce procédé étant caractérisé par l'étape

b. d'élimination du mélange réactionnel d'au moins 5 % en poids en tant que produit de tête, sur la base des réactifs chargés, afin d'obtenir un mélange d'esters qui, après avoir reposé, est exempt de solides, et caractérisé en outre en ce que

c. au moins 25 % en poids dudit produit de tête est de l'éthylène glycol.

2. Procédé selon la revendication 1, caractérisé en ce que l'autre oxyalkylène glycol a la formule :

$$HO-(CH_2\underset{R}{\underset{|}{C}}HO)_n-H$$

dans laquelle R est l'hydrogène ou un alkyle, avec 1 à 4 atomes de carbone, et n peut avoir les valeurs de 2 à 10, à l'exclusion du diéthylène glycol.

3. Procédé selon les revendications 1 ou 2, caractérisé en ce qu'un additif renforceur de la fonctionnalité choisie parmi l'alphaméthyl glucoside, la triéthanolamine, la diéthanolamine et le glycérol est présent pendant la réaction.

4. Procédé selon la revendication 3, caractérisé en ce que l'additif renforceur de la fonctionnalité est de l'alphaméthyl glucoside.

5. Procédé selon la revendication 3, caractérisé en ce que l'additif renforceur de la fonctionnalité est du glycérol dans une proportion inférieure à 2,5 % en poids, sur la base du poids total des réactifs chargés.

6. Procédé selon l'une quelconque des revendications précédentes, caractérisé en ce que le procédé est réalisé à une température de 190 à 280 °C et à une pression de 0,1 à 2 MPa.

7. Procédé selon l'une quelconque des revendications précédentes, caractérisé en ce que la réaction est maintenue jusqu'à ce que l'indice d'hydroxyle moyen du mélange obtenu se situe entre 100 et 500.

8. Matière cellulaire de polyuréthane rigide obtenue en faisant réagir un polyisocyanate organique et un polyol en présence d'un agent gonflant et d'un catalyseur pour la formation du polyuréthane, caractérisée en ce que le polyol comprend un mélange de polyols liquides à base d'ester téréphtalique susceptible d'être obtenu par le procédé conforme à l'une quelconque des revendications 1 à 7.

9. Matière cellulaire de polyisocyanurate rigide obtenue en faisant réagir un polyisocyanate organique et un élément polyol en présence d'un agent gonflant et d'un catalyseur de trimérisation du polyisocyanurate, caractérisée en ce que le polyol comprend un mélange de polyols liquides à base d'ester de téréphtalate susceptible d'être obtenu par le procédé conforme à l'une quelconque des revendications 1 à 7.